# EUROPÄISCHE PATENTSCHRIFT

(11) **EP 2 359 218 B1**
(45) Veröffentlichungstag und Bekanntmachung des Hinweises auf die Patenterteilung: **15.08.2018**
(21) Anmeldenummer: 09737455.7
(22) Anmeldetag: 23.10.2009
(51) Int. Cl.: G06F 3/01, G06F 3/041, B60K 37/06

(54) **HAPTISCHE BEDIENEINRICHTUNG**
HAPTIC CONTROL DEVICE
DISPOSITIF DE COMMANDE HAPTIQUE

(30) Priorität: 21.11.2008 DE 102008058566
(43) Veröffentlichungstag der Anmeldung: 24.08.2011
(73) Patentinhaber: Continental Automotive GmbH, 30165 Hannover (DE)
(72) Erfinder: DIETZ, Armin, 93051 Regensburg (DE); POFAHL, Heinz, 07552 Gera (DE)
(86) Internationale Anmeldenummer: PCT/EP2009/063975
(87) Internationale Veröffentlichungsnummer: WO 2010/057741

(56) Entgegenhaltungen:
- EP-A- 0 334 745
- DE-A1-102005 011 633
- DE-A1-102008 007 194
- DE-U1- 20 110 769
- JP-A- 2007 034 954
- US-A1- 2007 146 343

## Beschreibung

Die Erfindung bezieht sich auf eine Haptische Bedieneinrichtung, insbesondere für Kraftfahrzeuge mit einem mindestens einen berührungsempfindlichen Tastbereich aufweisenden Tastfeld, wobei bei Berührung des Tastbereichs ein Schaltsignal auslösbar und das Tastfeld durch einen Bewegungsantrieb in der Ebene des Tastfeldes in einem bestimmten Rhythmus bewegbar antreibbar ist und wobei das Tastfeld über ein oder mehrere flexible Verbindungselemente mit einem feststehenden Träger verbunden ist.

Bei derartigen haptischen Bedieneinrichtungen, die zur Auslösung eines Schaltsignals dienen, werden bei Betätigung eines Tastbereichs Bewegungen des Tastfeldes in einem bestimmten Rhythmus ausgelöst, um der Bedienperson eine Rückmeldung über die korrekte Auslösung des Schaltsignals zu geben.

Die JP 2007-034954 A beschreibt eine haptische Bedieneinrichtung, bei der ein Tastfeld über mehrere flexible Verbindungselemente mit einem feststehenden Träger verbunden ist, wobei die flexiblen Verbindungselemente als elastische Blöcke ausgestaltet sind, die zwischen dem Träger und dem Tastfeld angeordnet sind.

Die US 2007/0146343 A1 beschreibt eine haptische Bedieneinrichtung, bei der elastische Manschetten ein Gehäuse abschließen, welches ein unter einem Tastfeld angeordneten Display umgibt.

Die DE 201 10 769 U1 beschreibt eine haptische Bedieneinrichtung, bei der Silikonhütchen, die auf einem Grundrahmen angeordnet sind, als federelastisch wirksame Elemente dienen.

Aufgabe der Erfindung ist es, eine haptische Bedieneinrichtung der eingangs genannten Art zu schaffen, die einen einfachen und störungsunanfälligen Aufbau besitzt.

Diese Aufgabe wird erfindungsgemäß durch eine Bedieneinrichtung mit dem Merkmal des Anspruchs 1 gelöst.

Zur stabilen Positionierung und leichten Montage sind die trägerseitigen Enden der Haltearme in Lagerböcken fest eingespannt, die fest mit dem Träger verbunden sind.

Die wenigen einfachen Bauteile vermeiden hierbei eine störende Geräuschentwicklung.

Dabei können in einfacher Ausbildung die Haltearme Blechstreifen sein.

Sind die Haltearme Federarme, so bewirken die Tragelemente des Tastfeldes gleichzeitig die Rückführung des ausgelenkten Tastfeldes in seine Neutralstellung und erfüllen damit eine Doppelfunktion.

Vorzugsweise sind der oder die Haltearme in einem oder mehreren Randbereichen des Tastfeldes angeordnet.

Sind die Haltearme an einander gegenüberliegenden Randbereichen des Tastfeldes angeordnet, so bilden sie ein Parallelogramm, das für eine stabile Halterung des Tastbereichs sorgt.

Dabei können insbesondere bei großflächigen Tastfeldern zu deren stabilen Halterung an jedem Randbereich des Tastfeldes zwei oder mehr Haltearme angeordnet sein.

Die Haltearme können einen kreisförmigen Querschnitt besitzen.

Besitzen die Haltearme einen Rechteckquerschnitt, so ist damit auch eine geführte Auslenkbarkeit auf eine einzige Auslenkrichtung beschränkt, was eine stabile Haltung unterstützt.

Dabei entspricht die Richtung der Auslenkbarkeit der Antriebsrichtung des Bewegungsantriebes.

Ein gleichmäßiges Parallelogramm wird dabei dadurch erreicht, dass die Längsseiten der an einander gegenüberliegenden Randbereichen des Tastenfeldes angeordneten Haltearme sich parallel zueinander erstrecken, so dass die Ebene des Tastfeldes immer gleichmäßig ausgelenkt wird.

Zur Beeinflussung des auf das Tastfeld einwirkenden Kraft-/Weg-Verlaufs des Antriebs können die Haltearme über ihre Länge von dem Träger zum Tastfeld hin einen ungleichen Querschnitt aufweisen.

Es versteht sich, dass die Haltearme auch über ihre Länge von dem Träger zum Tastenfeld hin einen gleichbleibenden Querschnitt aufweisen können.

Um einen Abbremseffekt zum Ende eines Auslenkhubes durch den Bewegungsantrieb zu erzeugen, können die Federarme einen ganz oder teilweise von dem Träger zum Tastfeld hin sich verjüngenden Querschnitt besitzen.

Zur Flexibilisierung der Verbindungsbereiche können die trägerseitigen Enden der Haltearme mit dem Träger verbundene und/oder die tastfeldseitigen Enden der Haltearme mit dem Tastfeld verbundene Biegegelenke bilden, so dass eine Überlastung in den Verbindungsbereichen und eine Beeinflussung des Bewegungsprofils des Tastfeldes vermieden wird.

Zur Begrenzung der Auslenkbewegung des Tastfeldes können die Haltearme aus einer Neutrallage bis zur Anlage an Anschlägen auslenkbar sein.

Zur Dämpfung des Endes der Auslenkbewegung können die Anschläge elastische Dämpfelemente aufweisen.

Die Anschläge können Abstützflächen sein, die sich ganz oder teilweise zwischen dem Träger und dem Tastfeld erstrecken.

Erstrecken sich dabei die Abstützflächen zu den Federarmen hin gewölbt, so legen sich die Haltearme bei ihrer Auslenkung zunehmend an den Abstützflächen an, was zu einem zunehmenden Abbremsen der Auslenkbewegung und damit zur Vermeidung eines harten Anschlagens führt.

Dabei können die Abstützflächen eine in ihrem Wölbungsgrad sich ändernde Wölbung aufweisen, so dass damit der Abbremsverlauf bestimmt werden kann. Insbesondere kann auch ein nicht linearer Antrieb durch den Bewegungsantrieb, wie z. B. mit einem quadratisch ansteigenden Kraftverlauf durch eine entsprechende Wölbung zu einem linearen Bewegungsablauf kompensiert werden.

Vorzugsweise ist der Bewegungsantrieb ein in eine Bewegungsrichtung linear antreibender Bewegungsantrieb.

Der Bewegungsantrieb kann ein elektromechanischer Bewegungsantrieb, wie z. B. ein Magnetbewegungsantrieb oder ein Piezobewegungsantrieb, sein.

Dies ist von Vorteil, da damit problemlos von der menschlichen Hand gut erfassbare Beschleunigungen des Tastfeldes auf 3 G und mehr erzielt werden können.

Es ist aber auch jeder andere Bewegungsantrieb, wie z. B. ein pneumatischer Bewegungsantrieb, anwendbar.

Um eine Mehrzahl von Tastbereichen auf kleinem Raum realisieren zu können, kann das Tastfeld eine Mehrzahl über das Tastfeld verteilt angeordnete, voneinander unabhängig betätigbare berührungsempfindliche Tastbereiche aufweisen, wobei vorzugsweise zur einfachen Auffindbarkeit durch die Bedienperson die Tastbereiche in einer Matrix angeordnet sein können.

Die Tastbereiche können in einfacher Ausbildung Piezo- und/oder Kapazitiv- und/oder Resistivtastbereiche sein.

Zur haptischen Unterscheidbarkeit können unterschiedlichen Tastbereichen unterschiedliche bestimmte Rhythmen zugeordnet sein, in denen das Tastfeld bewegbar antreibbar ist.

Um den Tastbereichen eine visuelle Erfassbarkeit zuordnen zu können, kann in einfacher Weise das Tastfeld zumindest im Bereich der Tastbereiche transparent ausgebildet sein, wobei zwischen Tastfeld und Träger ein oder mehrere mit dem Träger fest verbundene Anzeigeinrichtungen angeordnet sind.

Ein geringes Bauvolumen und eine gegebenenfalls flexible Ansteuerbarkeit werden dabei dadurch erreicht, dass die Anzeigeeinrichtung eine optoelektrische Anzeigeeinrichtung, wie eine Flüssigkristallanzeige (LCD) oder eine organische Leuchtdiode (OLED) oder eine Vakuumfluoreszenzanzeige (VF), ist.

Dabei ist vorzugsweise durch die Anzeigeeinrichtung ein der Schaltfunktion des zugeordneten Tastbereichs zuordenbares alphanumerisches Zeichen und/oder Symbol darstellbar.

Zur Vermeidung einer Funktionsbeeinträchtigung durch Umwelteinflüsse wie Feuchte und Staub können der Träger und das Tastfeld zwei Gehäuseteile eines geschlossenen Gehäuses bilden, in dem zumindest die Anzeigeeinrichtung oder deren Anzeigeebene angeordnet ist, und die über eine Dichteinrichtung in der Ebene des Tastfeldes oder in einer zum Tastfeld parallelen Ebene relativ zueinander beweglich in Verbindung stehen.

Damit wird auch eine Beeinträchtigung der Sichtbarkeit des Darstellungsbereichs der Anzeigeeinrichtung vermieden.

Dazu können die Gehäuseteile von Tastfeld und Träger in der Ebene des Tastfelds oder in einer oder mehreren zum Tastfeld parallelen Ebenen aneinander angrenzen, wobei zwischen den aneinander angrenzenden Bereichen von Tastfeld und Träger die Dichteinrichtung angeordnet ist.

Zur relativen Bewegbarkeit kann dabei die Dichteinrichtung ein elastisches Dichtelement sein, das mit den aneinander angrenzenden Bereichen von Tastfeld und Träger verbunden ist.

Zur relativen Bewegbarkeit kann dabei die Dichteinrichtung ein elastisches Dichtelement, wie z. B. eine Membran, sein, das mit den aneinander angrenzenden Bereichen von Tastfeld und Träger verbunden ist.

Zur Vermeidung einer Beeinflussung des Bewegungsprofils, insbesondere bei starken Umgebungstemperaturänderungen, wie sie z. B. in einem Kraftfahrzeug vorkommen, besteht vorzugsweise das elastische Dichtelement aus einem Werkstoff, dessen Steifigkeit in einem Temperaturbereich zwischen -40°C bis +110°C zumindest annähernd gleich ist.

Dazu kann das Dichtelement aus einem Kunststoff bestehen.

In einer anderen, eine Beeinflussung des Bewegungsprofils zumindest weitgehend vermeidenden Ausbildung der Dichteinrichtung kann zwischen den parallel aneinander angrenzenden Ebenen von Tastfeld und Träger eine ein oder mehrere Labyrinthe aufweisende, eine geschlossene Ringbahn bildende Labyrinthdichtung angeordnet sein, wobei die Stege der Labyrinthdichtung mit einem größeren Spiel in einer zur Ebene des Tastfeldes parallelen Ebene in die Nuten der Labyrinthdichtung ragen, als das Tastfeld vom Bewegungstrieb relativ zum Träger bewegbar ist.

Vorzugsweise besitzt dabei die Ringbahn einen rechteckigen Verlauf, wobei die Geraden des Rechtecks mittels Radien miteinander verbunden sind.

Ausführungsbeispiele der Erfindung sind in der Zeichnung dargestellt und werden im Folgenden näher beschrieben. Es zeigen:
- Figur 1: eine perspektivische Untenansicht eines ersten Ausführungsbeispiels einer Bedieneinrichtung,
- Figur 2: einen Ausschnitt der Bedieneinrichtung nach Figur 1 im Querschnitt,
- Figur 3: einen vergrößerten Ausschnitt der Bedieneinrichtung nach Figur 1,
- Figur 4: eine perspektivische Untenansicht eines zweiten Ausführungsbeispiels einer Bedieneinrichtung,
- Figur 5: eine zweite perspektivische Teiluntenansicht der Bedieneinrichtung nach Figur 4,
- Figur 6: eine perspektivische Querschnittsansicht der Bedieneinrichtung nach Figur 4,
- Figur 7: eine perspektivische Ansicht eines vergrößerten Ausschnitts der Bedieneinrichtung nach Figur 4.

Die dargestellten Bedieneinrichtungen besitzen ein Tastfeld 1, dessen Oberseite mit einer transparenten Folie 2 versehen ist, die eine Mehrzahl nicht dargestellter transparenter berührungsempfindlicher Tastbereiche aufweist.

Die Tastbereiche können Kapazitivtastbereiche sein, bei deren Berührung ein Schaltsignal ausgelöst wird, das einem zu betätigenden Gerät zuführbar ist.

Das Tastfeld 1 besitzt einen rechteckigen Rahmen 3, dessen innerer Bereich mit einer transparenten Platte 4 verschlossen ist, auf der die Folie 2 aufgebracht ist.

An den kurzen Seiten des Rahmens 3 sind mit ihren einen Enden jeweils zwei Federarme 5 mit Rechteckquerschnitt in einem Abstand zueinander angeordnet, die rechtwinklig von der Seite des Tastfeldes 1 wegragen, welche der Folie 2 abgewandt ist.

Die Federarme 5 erstrecken sich mit ihren Längsseiten parallel zu den kurzen Seiten des Rahmens 3 und sind mit ihren zweiten Enden an einem Träger 6 befestigbar.

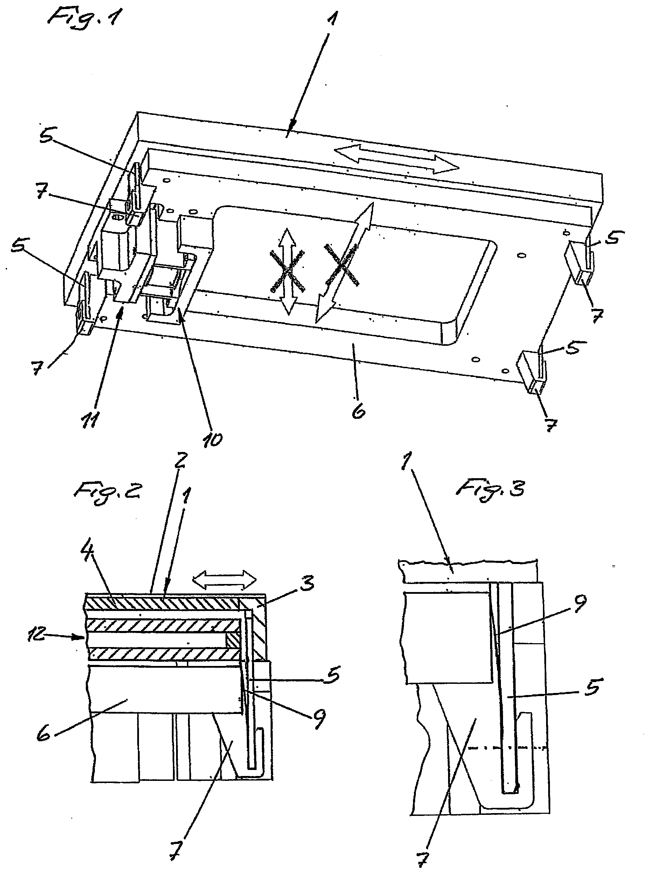

Bei dem Ausführungsbeispiel der Figuren 1 bis 3 sind die zweiten Enden der Federarme 5 in Lagerböcken 7 des Trägers 6 fest eingespannt.

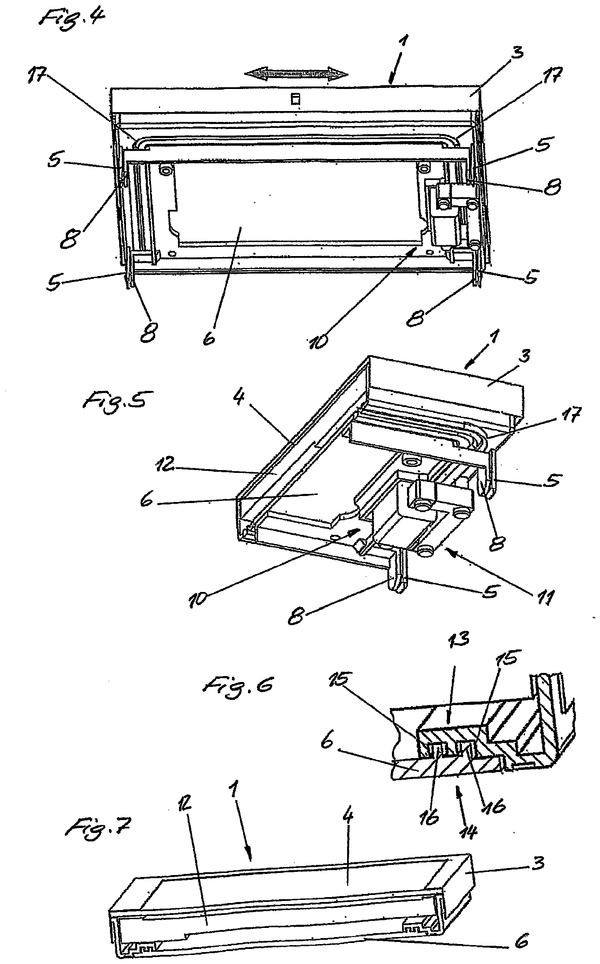

Bei dem Ausführungsbeispiel der Figuren 4 bis 7 besitzt der Träger 6 Laschen 8, deren freien Enden mit den freien Enden der Federarme 5 verbunden sind.

Die Lagerböcke 7 und die Laschen 8 sind auf der der Mitte des Trägers 6 zugewandten Seite der jeweiligen Federarme 5 angeordnet und weisen an ihren den Federarmen 5 zugewandten Seitenabstützflächen 9 mit einer Wölbung auf, die sich über einen Teil des Abstandes zwischen Träger 6 und Tastenfeld 1 erstreckt.

Ausgehend von den Befestigungsstellen der Federarme 5 an den Lagerböcken 7 bzw. den Laschen 8 nähern sich die Abstützflächen 9 zu ihrem anderen Ende hin dem Mittelbereich des Trägers 6.

Dadurch ist das mittels der Federarme 5 getragene und über diese mit dem Träger 6 verbundene Tastfeld 1 in Richtung seiner Längserstreckung relativ zum Träger 6 auslenkbar.

Dabei bilden die Federarme 5 ein Parallelogramm, so dass andere Auslenkungen, als in Längserstreckungsrichtung des Tastfeldes 1 nicht möglich sind.

An dem Träger 6 ist weiterhin ein Magnetbewegungsantrieb 10 angeordnet, der bei Berührung eines Tastbereiches und Auslösung des Schaltsignals auf einen mit dem Tastfeld 1 verbundenen Anker 11 zur Auslenkung des Tastfeldes 1 einwirkt.

Diese Auslenkung erfolgt über einen Weg in der Größenordnung von 0,2 mm bis 0,5 mm alternierend, wobei jedem Tastbereich ein eigener Rhythmus zugeordnet ist, in dem das Tastfeld 1 bei Berührung eines Tastbereichs von dem Magnetbewegungsantrieb 10 schwingend angetrieben wird.

Bei jeder Auslenkung des Tastfeldes 1 gelangen die Federarme 5 an der einen kurzen Seite des Rahmens 3 zunehmend zur Anlage an den Wölbungen der ihnen zugeordneten Abstützflächen 9, so dass zum Ende einer Auslenkung die Federarme 5 zumindest weitgehend an den ihnen zugeordneten Abstützflächen 9 in Anlage sind.

Das Zurückschwingen erfolgt dann bei ausgeschaltetem Magnetbewegungsantrieb 10 durch die Federkraft der Federarme 5.

Dabei gelangen die beiden anderen Federarme 5 zur Anlage an den ihnen zugeordneten Abstützflächen 9.

Dieser Schwingrhythmus ist durch die den Tastbereich berührende Bedienperson haptisch erfassbar und erkennbar.

Haptisch erfolgt somit sowohl eine Rückmeldung, dass das Schaltsignal ausgelöst wurde, als auch aufgrund des Erkennens des speziellen Rhythmusses, welcher Tastbereich betätigt wurde.

Damit kann die Bedienperson feststellen, ob sie den von ihr zu betätigten Tastbereich tatsächlich auch berührt hatte.

Um zunächst die Stelle des jeweils zu betätigenden Tastbereichs auf dem Tastfeld 1 visuell erkennen zu können, ist auf der der Folie 2 abgewandten Seite des Tastfeldes 1 auf dem Träger 6 eine Flüssigkristallanzeige 12 angeordnet, deren dargestellte Zeichen und/oder Symbole die Bedienperson durch die transparente Platte 4 des Tastfelds 1 sehen kann.

Dabei ist hinter jedem Tastbereich ein diesem zugeordnetes Zeichen und/oder Symbol angeordnet.

Bei dem Ausführungsbeispiel der Figuren 4 bis 7 bilden Träger und Tastfeld 1 zwei Gehäuseteile eines geschlossenen Gehäuses.

Das Tastfeld 1 ist dabei als an der der Platte 4 gegenüberliegenden Seite offener Kasten ausgebildet, der an seinem Öffnungsbereich einen zur Platte 4 parallelen, umlaufenden Dichtungsbereich 13 aufweist.

An diesem Dichtungsbereich 13 liegt in einer dazu parallelen Ebene ein ebener Dichtungsbereich 14 des plattenartig ausgebildeten Trägers 6 an.

An dem Dichtungsbereich 13 des Tastfeldes 1 sind zwei zueinander parallel sich entlang des Öffnungsbereichs erstreckende, eine Ringbahn bildende, endlos umlaufende Nuten 15 ausgebildet, in die entsprechende endlos umlaufende Stege 16 des Dichtungsbereichs 14 des Trägers 6 hineinragen.

Die Ringbahnen aus Nuten 15 und Stegen 16, die eine Labyrinthdichtung bilden, haben einen rechteckigen Verlauf, wobei die Geraden des Rechtecks mittels Radien 17 miteinander verbunden sind.

Um die Auslenkbewegung des Tastfeldes 1 ungehindert zum Träger 6 zu ermöglichen, besitzen die Nuten 15 eine solche Breite, dass die Stege 16 bei der Auslenkung des Tastfeldes 1 nicht zur Anlage an den Nutwänden gelangen.

## Patentansprüche

1. Haptische Bedieneinrichtung, insbesondere für Kraftfahrzeuge, mit einem mindestens einen berührungsempfindlichen Tastbereich aufweisenden Tastfeld, einem Träger und einen Bewegungsantrieb, wobei der Bewegungsantrieb auf dem Träger angeordnet ist, wobei bei Berührung des Tastbereichs ein Schaltsignal auslösbar und das Tastfeld durch den Bewegungsantrieb in der Ebene des Tastfeldes in einem bestimmten Rhythmus bewegbar antreibbar ist und wobei das Tastfeld über ein oder mehrere flexible Verbindungselemente mit dem einem feststehenden Träger verbunden ist, **dadurch gekennzeichnet, dass** der Träger Lagerböcke aufweist, dass das oder die flexiblen Verbindungselemente flexibel auslenkbare Haltearme sind, deren eines Ende mit dem Träger (6) und deren anderes Ende mit dem Tastfeld (1) verbunden ist, dass die trägerseitigen Enden der Haltearme (5) in den Lagerböcken (7) fest eingespannt sind, die fest mit dem Träger (6) verbunden sind.

2. Haptische Bedieneinrichtung nach Anspruch 1, **dadurch gekennzeichnet, dass** die trägerseitigen Enden der Haltearme (5) mit dem Träger (6) verbundene und/oder die tastfeldseitigen Enden der Haltearme (5) mit dem Tastfeld (1) verbundene Biegegelenke bilden.

3. Haptische Bedieneinrichtung nach einem der vorhergehenden Ansprüche, **dadurch gekennzeichnet, dass** die Haltearme (5) aus einer Neutrallage bis zur Anlage an Anschlägen auslenkbar sind.

4. Haptische Bedieneinrichtung nach Anspruch 3, **dadurch gekennzeichnet, dass** die Anschläge Abstützflächen (9) sind, die sich ganz oder teilweise zwischen dem Träger (6) und dem Tastfeld (1) erstrecken.

5. Haptische Bedieneinrichtung nach Anspruch 4, **dadurch gekennzeichnet, dass** die Abstützflächen (9) sich zu den Haltearmen (5) hin gewölbt erstrecken.

6. Haptische Bedieneinrichtung nach Anspruch 5, **dadurch gekennzeichnet, dass** die Abstützflächen (9) eine in ihrem Wölbungsgrad sich ändernde Wölbung aufweisen.

7. Haptische Bedieneinrichtung nach einem der vorhergehenden Ansprüche, **dadurch gekennzeichnet, dass** der Bewegungsantrieb ein in eine Bewegungsrichtung linear antreibender Bewegungsantrieb ist.

8. Haptische Bedieneinrichtung nach Anspruch 7, **dadurch gekennzeichnet, dass** der Bewegungsantrieb ein elektromechanischer Bewegungsantrieb ist.

9. Haptische Bedieneinrichtung nach Anspruch 8, **dadurch gekennzeichnet, dass** der Bewegungsantrieb ein Magnetbewegungsantrieb (10) ist.

10. Haptische Bedieneinrichtung nach Anspruch 8, **dadurch gekennzeichnet, dass** der Bewegungsantrieb ein Piezobewegungsantrieb ist.

11. Haptische Bedieneinrichtung nach Anspruch 7, **dadurch gekennzeichnet, dass** der Bewegungsantrieb ein pneumatischer Bewegungsantrieb ist.

12. Haptische Bedieneinrichtung nach einem der vorhergehenden Ansprüche, **dadurch gekennzeichnet, dass** das Tastfeld (1) eine Mehrzahl über das Tastfeld (1) verteilt angeordnete, voneinander unabhängig betätigbare berührungsempfindliche Tastbereiche aufweist.

13. Haptische Bedieneinrichtung nach Anspruch 12, **dadurch gekennzeichnet, dass** die Tastbereiche in einer Matrix angeordnet sind.

14. Haptische Bedieneinrichtung nach einem der Ansprüche 12 und 13, **dadurch gekennzeichnet, dass** der oder die Tastbereiche Piezo- und/oder Kapazitiv- und/oder Resistivtastbereiche sind.

15. Haptische Bedieneinrichtung nach einem der Ansprüche 12 bis 14, **dadurch gekennzeichnet, dass** unterschiedlichen Tastbereichen unterschiedliche bestimmte Rhythmen zugeordnet sind, in denen das Tastfeld (1) bewegbar antreibbar ist.

16. Haptische Bedieneinrichtung nach einem der vorhergehenden Ansprüche, **dadurch gekennzeichnet, dass** das Tastfeld (1) zumindest im Bereich der Tastbereiche transparent ausgebildet ist, wobei zwischen Tastfeld (1) und Träger (6) ein oder mehrere mit dem Träger (6) fest verbundene Anzeigeinrichtungen angeordnet sind.

17. Haptische Bedieneinrichtung nach Anspruch 16, **dadurch gekennzeichnet, dass** die Anzeigeeinrichtung eine optoelektrische Anzeigeeinrichtung ist.

18. Haptische Bedieneinrichtung nach Anspruch 17, **dadurch gekennzeichnet, dass** die elektrooptische Anzeigeeinrichtung eine Flüssigkristallanzeige (LED) (12) oder eine organische Leuchtdiode (OLED) oder eine Vakuumfluoreszenzanzeige (VF) ist.

19. Haptische Bedieneinrichtung nach einem der Ansprüche 16 bis 18, **dadurch gekennzeichnet, dass** durch die Anzeigeeinrichtung eine der Schaltfunktion des zugeordneten Tastbereichs zuordenbares alphanumerisches Zeichen und/oder Symbol darstellbar ist.

20. Haptische Bedieneinrichtung nach einem der vorhergehenden Ansprüche, **dadurch gekennzeichnet, dass** der Träger (6) und das Tastfeld (1) zwei Gehäuseteile eines geschlossenen Gehäuses bilden, in dem zumindest die Anzeigeeinrichtung oder deren Anzeigeebene angeordnet ist, und die über eine Dichteinrichtung in der Ebene des Tastfeldes oder in einer zum Tastfeld (1) parallelen Ebene relativ zueinander beweglich in Verbindung stehen.

21. Haptische Bedieneinrichtung nach Anspruch 20, **dadurch gekennzeichnet, dass** die Gehäuseteile von Tastfeld (1) und Träger (6) in der Ebene des Tastfelds oder einer oder mehreren zum Tastfeld (1) parallelen Ebenen aneinander angrenzen, wobei zwischen den aneinander angrenzenden Bereichen von Tastfeld (1) und Träger (6) die Dichteinrichtung angeordnet ist.

22. Haptische Bedieneinrichtung nach Anspruch 21, **dadurch gekennzeichnet, dass** die Dichteinrichtung ein elastisches Dichtelement ist, das mit den aneinander angrenzenden Bereichen von Tastfeld und Träger verbunden ist.

23. Haptische Bedieneinrichtung nach Anspruch 22, **dadurch gekennzeichnet, dass** das elastische Dichtelement eine Membran ist.

24. Haptische Bedieneinrichtung nach einem der Ansprüche 22 und 23, **dadurch gekennzeichnet, dass** das elastische Dichtelement aus einem Werkstoff besteht, dessen Steifigkeit in einem Temperaturbereich zwischen-40°C bis +110°C zumindest annähernd gleich ist.

25. Haptische Bedieneinrichtung nach Anspruch 24, **dadurch gekennzeichnet, dass** das Dichtelement aus einem Kunststoff besteht.

26. Haptische Bedieneinrichtung nach Anspruch 21, **dadurch gekennzeichnet, dass** zwischen den parallel aneinander angrenzenden Ebenen von Tastfeld (1) und Träger (6) eine ein oder mehrere Labyrinthe aufweisende, eine geschlossene Ringbahn bildende Labyrinthdichtung angeordnet ist, wobei die Stege (16) der Labyrinthdichtung mit einem größeren Spiel in einer zur Ebene des Tastfeldes (1) parallelen Ebene in die Nuten (15) der Labyrinthdichtung ragen, als das Tastfeld (1) vom Bewegungstrieb relativ zum Träger (6) bewegbar ist.

27. Haptische Bedieneinrichtung nach Anspruch 26, **dadurch gekennzeichnet, dass** die Ringbahn einen rechteckigen Verlauf besitzt, wobei die Geraden des Rechtecks mittels Radien (17) miteinander verbunden sind.

## Claims

1. Haptic operating device, particularly for motor vehicles, comprising a touch panel having at least one touch-sensitive area, comprising a support and a motion drive, the motion drive being arranged on the support, a switching signal being able to be triggered when the touch area is touched and the touch panel being able to be activated by the motion drive so as to be able to move at a certain rhythm in the plane of the touch panel, and the touch panel being connected to the fixed support by means of one or more flexible connecting elements, **characterized in that** the support has bearing blocks, **in that** the flexible connecting element(s) is a retaining arm (are retaining arms) which may be deflected in a flexible manner, one end thereof being connected to the support (6) and the other end thereof being connected to the touch panel (1), **in that** the ends of the retaining arms (5) on the support side are fixedly clamped in the bearing blocks (7) which are fixedly connected to the support (6).

2. Haptic operating device according to Claim 1, **characterized in that** the ends of the retaining arms (5) on the support side form bending joints which are connected to the support (6) and/or the ends of the retaining arms (5) on the touch panel side form bending joints which are connected to the touch panel (1).

3. Haptic operating device according to one of the preceding claims, **characterized in that** the retaining arms (5) may be deflected from a neutral position until they come to bear against stops.

4. Haptic operating device according to Claim 3, **characterized in that** the stops are support surfaces (9) which extend wholly or partially between the support (6) and the touch panel (1).

5. Haptic operating device according to Claim 4, **characterized in that** the support surfaces (9) extend in a bulged manner toward the retaining arms (5).

6. Haptic operating device according to Claim 5, **characterized in that** the support surfaces (9) have a bulged portion which alters in the extent to which it bulges.

7. Haptic operating device according to one of the preceding claims, **characterized in that** the motion drive is a motion drive which is activated in a linear manner in a direction of movement.

8. Haptic operating device according to Claim 7, **characterized in that** the motion drive is an electromechanical motion drive.

9. Haptic operating device according to Claim 8, **characterized in that** the motion drive is a magnetic motion drive (10).

10. Haptic operating device according to Claim 8, **characterized in that** the motion drive is a piezo-electric motion drive.

11. Haptic operating device according to Claim 7, **characterized in that** the motion drive is a pneumatic motion drive.

12. Haptic operating device according to one of the preceding claims, **characterized in that** the touch panel (1) has a plurality of touch-sensitive areas distributed over the touch panel (1) and able to be actuated independently of one another.

13. Haptic operating device according to Claim 12, **characterized in that** the touch areas are arranged in a matrix.

14. Haptic operating device according to one of Claims 12 and 13, **characterized in that** the touch areas are piezo-electric and/or capacitive and/or resistive touch areas.

15. Haptic operating device according to one of Claims 12 to 14, **characterized in that** various specific rhythms are associated with different touch areas, in which the touch panel (1) may be activated so as to be able to move.

16. Haptic operating device according to one of the preceding claims, **characterized in that** the touch panel (1) is configured to be transparent at least in the region of the touch areas, one or more display devices fixedly connected to the support (6) being arranged between the touch panel (1) and support (6).

17. Haptic operating device according to Claim 16, **characterized in that** the display device is an optoelectrical display device.

18. Haptic operating device according to Claim 17, **characterized in that** the optoelectrical display device is a liquid crystal display (LED) (12) or an organic light-emitting diode (OLED) or a vacuum fluorescent display (VFD).

19. Haptic operating device according to one of Claims 16 to 18, **characterized in that** an alphanumerical character and/or symbol which may be associated with the switching function of the associated touch area may be represented by means of the display device.

20. Haptic operating device according to one of the preceding claims, **characterized in that** the support (6) and the touch panel (1) form two housing parts of a closed housing, in which at least the display device or the display plane thereof is arranged, and which are connected to each other by means of a sealing device so as to be able to move relative to each other in the plane of the touch panel or in a plane parallel to the touch panel (1).

21. Haptic operating device according to Claim 20, **characterized in that** the housing parts of the touch panel (1) and the support (6) are adjacent to one another in the plane of the touch panel or in one or more planes parallel to the touch panel (1), the sealing device being arranged between adjacent regions of the touch panel (1) and the support (6).

22. Haptic operating device according to Claim 21, **characterized in that** the sealing device is a resilient sealing element which is connected to the adjacent regions of the touch panel and the support.

23. Haptic operating device according to Claim 22, **characterized in that** the resilient sealing element is a diaphragm.

24. Haptic operating device according to one of Claims 22 and 23, **characterized in that** the resilient sealing element consists of a material, the rigidity thereof being at least approximately constant in a temperature range between -40ºC to +110ºC.

25. Haptic operating device according to Claim 24, **characterized in that** the sealing element consists of a plastics material.

26. Haptic operating device according to Claim 21, **characterized in that** a labyrinth seal comprising one or more labyrinths and forming a closed annular path is arranged between the adjacent planes of the touch panel (1) and the support (6) which are parallel to one another, the projections (16) of the labyrinth seal protruding with a greater clearance into the grooves (15) of the labyrinth seal, in a plane parallel to the plane of the touch panel (1), than the touch panel (1) may be moved by the motion drive relative to the support (6).

27. Haptic operating device according to Claim 26, **characterized in that** the annular path has a rectangular characteristic, the straight lines of the rectangle being connected together by means of radii (17).

## Revendications

1. Dispositif de commande haptique, en particulier pour véhicules à moteur, qui comprend un panneau tactile pourvu d'au moins une zone tactile, un support et un système d'entraînement, dans lequel le système d'entraînement est disposé sur le support, dans lequel un signal de commutation peut être déclenché lorsque la zone tactile est touchée, et le panneau tactile peut être entraîné par le système d'entraînement dans le plan du panneau tactile de manière à pouvoir effectuer des mouvements à un rythme défini et dans lequel le panneau tactile est relié au support fixe par l'intermédiaire d'un ou de plusieurs éléments d'assemblage flexibles,
**caractérisé en ce que** le support comporte des paliers, **en ce que** le ou les éléments d'assemblage flexibles sont des bras de maintien flexibles pouvant être écartés dont une extrémité est reliée au support (6) et dont l'autre extrémité est reliée au panneau tactile (1), **en ce que** les extrémités côté du support des bras de maintien (5) sont solidement serrées dans les paliers (7) qui sont solidement reliés au support (6).

2. Dispositif de commande haptique selon la revendication 1, **caractérisé en ce que** les extrémités côté support des bras de maintien (5) forment des articulations de flexion reliées au support (6) et/ou **en ce que** les extrémités côté panneau tactile des bras de maintien (5) forment des articulations de flexion reliées au panneau tactile (1).

3. Dispositif de commande haptique selon l'une des revendications précédentes, **caractérisé en ce que** les bras de maintien (5) peuvent être écartés d'une position neutre jusqu'à venir en appui sur des butées.

4. Dispositif de commande haptique selon la revendication 3, **caractérisé en ce que** les butées sont des surfaces d'appui (9) s'étendant entièrement ou partiellement entre le support (6) et le panneau tactile (1).

5. Dispositif de commande haptique selon la revendication 4, **caractérisé en ce que** les surfaces d'appui (9) s'étendent de manière bombée vers les bras de maintien (5) .

6. Dispositif de commande haptique selon la revendication 5, **caractérisé en ce que** les surfaces d'appui (9) présentent un bombement dont le degré de bombement varie.

7. Dispositif de commande haptique selon l'une des revendications précédentes, **caractérisé en ce que** le système d'entraînement est un système d'entraînement effectuant un entrainement linéaire dans la direction de mouvement.

8. Dispositif de commande haptique selon la revendication 7, **caractérisé en ce que** le système d'entraînement est un système d'entraînement électromécanique.

9. Dispositif de commande haptique selon la revendication 8, **caractérisé en ce que** le système d'entraînement est un système d'entraînement magnétique (10).

10. Dispositif de commande haptique selon la revendication 8, **caractérisé en ce que** le système d'entraînement est un système d'entraînement piézoélectrique.

11. Dispositif de commande haptique selon la revendication 7, **caractérisé en ce que** le système d'entraînement est un système d'entraînement pneumatique.

12. Dispositif de commande haptique selon l'une des revendications précédentes, **caractérisé en ce que** le panneau tactile (1) comporte une pluralité de zones tactiles disposées de manière répartie sur le panneau tactile (1) et pouvant être actionnées indépendamment les unes des autres.

13. Dispositif de commande haptique selon la revendication 12, **caractérisé en ce que** les zones tactiles sont disposées sous la forme d'une matrice.

14. Dispositif de commande haptique selon l'une des revendications 12 et 13, **caractérisé en ce que** la ou les zones tactiles est/sont des zones piézoélectriques et/ou capacitives et/ou résistives.

15. Dispositif de commande haptique selon l'une des revendications 12 à 14, **caractérisé en ce que** différents rythmes définis sont associés à des zones tactiles définies dans lesquelles le panneau tactile (1) peut être entraîné.

16. Dispositif de commande haptique selon l'une des revendications précédentes, **caractérisé en ce que** le panneau tactile (1) est réalisé de manière à être transparent dans au moins l'une des zones tactiles, dans lequel un ou plusieurs dispositifs d'affichage reliés solidement au support (6) sont disposés entre le panneau tactile (1) et le support (6).

17. Dispositif de commande haptique selon la revendication 16, **caractérisé en ce que** le dispositif d'affichage est un dispositif d'affichage optoélectrique.

18. Dispositif de commande haptique selon la revendication 17, **caractérisé en ce que** le dispositif d'affichage électro-optique est un afficheur à cristaux liquides (LED) (12) ou une diode électroluminescente organique (OLED) ou un afficheur à fluorescence sous vide (VF).

19. Dispositif de commande haptique selon l'une des revendications 16 à 18, **caractérisé en ce qu'**un caractère alphanumérique et/ou un symbole pouvant être associé à la fonction de commutation de la zone tactile associée peut être représenté par le dispositif d'affichage.

20. Dispositif de commande haptique selon l'une des revendications précédentes, **caractérisé en ce que** le support (6) et le panneau tactile (1) forment deux parties de boîtier d'un boîtier fermé dans lequel est disposé au moins le dispositif d'affichage ou son plan d'affichage, qui sont reliées de manière mobile l'une par rapport à l'autre par l'intermédiaire d'un dispositif d'étanchéité dans le plan du panneau tactile ou dans un plan parallèle au panneau tactile (1) .

21. Dispositif de commande haptique selon la revendication 20, **caractérisé en ce que** les parties de boîtier du panneau tactile (1) et du support (6) sont adjacentes l'une à l'autre dans le plan du panneau tactile ou dans plusieurs plans parallèles au panneau tactile (1), dans lequel le dispositif d'étanchéité est disposé entre les zones adjacentes les unes aux autres du panneau tactile (1) et du support (6).

22. Dispositif de commande haptique selon la revendication 21, **caractérisé en ce que** le dispositif d'étanchéité est un élément d'étanchéité élastique qui est relié aux zones adjacentes les unes aux autres du panneau tactile et du support.

23. Dispositif de commande haptique selon la revendication 22, **caractérisé en ce que** l'élément d'étanchéité élastique est une membrane.

24. Dispositif de commande haptique selon l'une des revendications 22 et 23, **caractérisé en ce que** l'élément d'étanchéité élastique est constitué d'un matériau dont la rigidité est au moins approximativement constante dans une plage de températures comprise entre -40°C et +110°C.

25. Dispositif de commande haptique selon la revendication 24, **caractérisé en ce que** l'élément d'étanchéité est constitué de matière plastique.

26. Dispositif de commande haptique selon la revendication 21, **caractérisé en ce qu'**un joint labyrinthe comportant un ou plusieurs labyrinthes et formant un chemin annulaire fermé est disposé entre les plans mutuellement adjacents et parallèles du panneau tactile (1) et du support (6), dans lequel les entretoises (16) du joint labyrinthe font saillie dans les rainures (15) du joint labyrinthe avec un jeu plus important dans un plan parallèle au plan du panneau tactile (1), que le mouvement du panneau tactile (1) par rapport au support (6), produit par le système d'entrainement.

27. Dispositif de commande haptique selon la revendication 26, **caractérisé en ce que** le chemin annulaire présente un tracé rectangulaire, dans lequel les droites du rectangle sont reliées les unes aux autres par l'intermédiaire de rayons (17).
